(19) Europäisches Patentamt
European Patent Office
Office européen des brevets

(11) **EP 3 057 168 B1**

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(51) Int Cl.:
*H01M 8/04537* (2016.01)    *H01M 8/1018* (2016.01)
*H01M 8/124* (2016.01)

(21) Anmeldenummer: **16000096.4**

(22) Anmeldetag: **15.01.2016**

(54) **VERFAHREN ZUR ERMITTLUNG VON ÜBERSPANNUNGEN IN BRENNSTOFFZELLEN**

METHOD FOR DETERMINING OVERVOLTAGE IN FUEL CELLS

PROCEDE DE DETERMINATION DE SURTENSIONS DANS DE PILES A COMBUSTIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2015 DE 102015001572**

(43) Veröffentlichungstag der Anmeldung:
**17.08.2016 Patentblatt 2016/33**

(73) Patentinhaber: **Forschungszentrum Jülich GmbH 52425 Jülich (DE)**

(72) Erfinder:
- **Kulikovsky, Andrei**
  **52385 Nideggen (DE)**
- **Berg, Peter**
  **Camrose, AB T4V 1K6 (CA)**

(56) Entgegenhaltungen:
**EP-A1- 1 505 676    JP-A- H07 282 832**

- **S. B. ADLER: "Reference Electrode Placement in Thin Solid Electrolytes", JOURNAL OF THE ELECTROCHEMICAL SOCIETY, Bd. 149, Nr. 5, 2. April 2002 (2002-04-02) , Seiten E166-E172, XP055272794, ISSN: 0013-4651, DOI: 10.1149/1.1467368**

- **OFFER G J ET AL: "Using electrochemical impedance spectroscopy to compensate for errors when measuring polarisation curves during three-electrode measurements of solid oxide fuel cell electrodes", ELECTROCHIMICA ACTA, ELSEVIER SCIENCE PUBLISHERS, BARKING, GB, Bd. 53, Nr. 26, 8. April 2008 (2008-04-08) , Seiten 7614-7621, XP023907519, ISSN: 0013-4686, DOI: 10.1016/J.ELECTACTA.2008.04.001 [gefunden am 2008-04-08]**

- **MASAHIRO WATANABE ET AL: "MANAGEMENT OF THE WATER CONTENT IN POLYMER ELECTROLYTE MEMBRANES WITH POROUS FIBER WICKS", JOURNAL OF THE ELECTROCHEMICAL SOCIETY, ELECTROCHEMICAL SOCIETY, Bd. 140, Nr. 11, 1. November 1993 (1993-11-01), Seiten 3190-3193, XP000424491, ISSN: 0013-4651**

- **DIETMAR GERTEISEN: "Realising a reference electrode in a polymer electrolyte fuel cell by laser ablation", JOURNAL OF APPLIED ELECTROCHEMISTRY, KLUWER ACADEMIC PUBLISHERS, DO, Bd. 37, Nr. 12, 3. Juli 2007 (2007-07-03), Seiten 1447-1454, XP019552392, ISSN: 1572-8838, DOI: 10.1007/S10800-007-9352-Y**

- **J. Winkler ET AL: "Geometric Requirements of Solid Electrolyte Cells with a Reference Electrode", Journal of The Electrochemical Society, vol. 145, no. 4, 1 January 1998 (1998-01-01), page 1184, XP055414147, US ISSN: 0013-4651, DOI: 10.1149/1.1838436**

**Beschreibung**

Die Erfindung betrifft ein neues Brennstoffzellendesign zur Ermittlung von Überspannungen.

Stand der Technik

In einer elektrochemischen Zelle werden die elektrochemischen Reaktionen an den beteiligten Elektroden maßgeblich von den Halbzellen-Überspannungen beeinflusst. Diese Überspannungen umfassen dabei sowohl Beiträge durch die Aktivierung als auch durch Transportverluste der entsprechenden Halbzellen. Daher wird es als vorrangiges Ziel angesehen, diese Beiträge im Rahmen einen neue Zellkonzeptes zu minimieren. Eine der bislang gängigsten Verfahren zur Messung von Halbzellen-Überspannungen ist das Verfahren mit einer Referenzelektrode.

Eine Referenzelektrode zielt immer darauf ab, das Potential $\Phi$ der Elektrolytmembran an einem beliebigen Punkt zwischen zwei Elektroden zu messen. Die Kenntnis dieses Potentials ermöglicht es im Prinzip, die Kathoden- und die Anoden-Überspannung zu separieren. Es hat sich jedoch herausgestellt, dass die geeignete Positionierung der Referenzelektrode nicht ganz einfach ist.

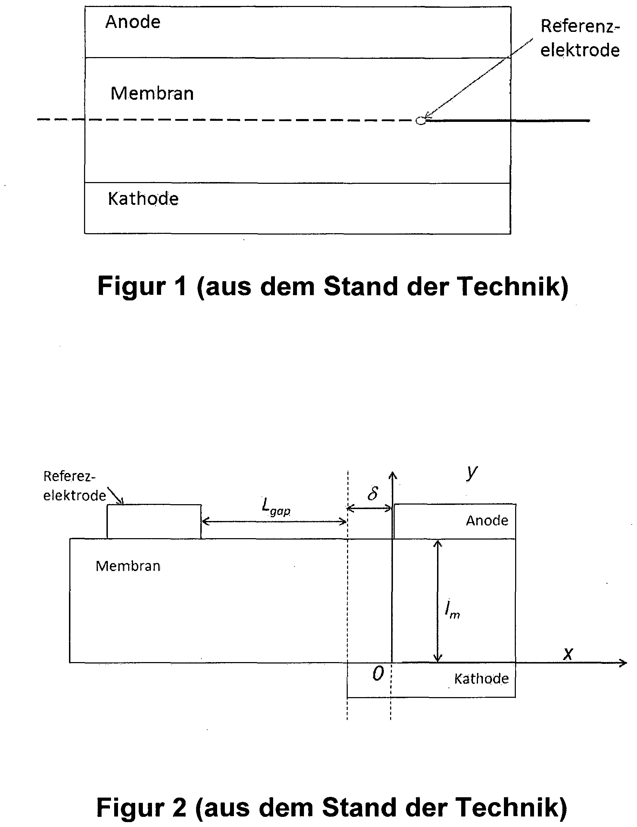

Im Allgemeinen gibt es zwei Möglichkeiten, eine Referenzelektrode zu positionieren. Bei der ersten Möglichkeit wird die Referenzelektrode direkt in die Membran eingebettet. In J. H. Ohs, U. Sauter, S. Maass, D. Stolten, J. Electrochem. Soc. 159(7), FI81-F186 (2012) wird beschrieben, dass diese Ausgestaltung in Polymerelektrolytmembran-Brennstoffzellen (PEMFCs) relativ leicht zu realisieren ist, indem eine 2-lagige Polymerelektrolytmembran verwendet wird, bei der zwischen den Lagen ein Platindraht angeordnet ist (siehe Figur 1). Dabei fungiert ein ungeschütztes Ende dieses Drahtes als Referenzelektrode, während der Rest des Drahtes innerhalb der Membran vor Protonen geschützt ist. Um die Referenzelektrode mit Wasserstoff zu versorgen kann ein zweiter Draht in unmittelbarer Nachbarschaft zur Referenzelektrode eingeschlossen in den 2 Lagen der Polymermembran vorgesehen sein. Sobald eine Gleichspannung an die beiden Drähte angelegt wird, erfolgt die elektrochemische Aufspaltung des umgebenen Wassers, so dass an der Oberfläche der Referenzelektrode Wasserstoff generiert wird.

Zu beachten ist jedoch, dass sich die Realisierung dieser Ausgestaltung in einer Festoxid-Brennstoffzelle (SOFC = solid oxide fuel cell) deutlich schwieriger gestaltet, da in einer Festoxid-Brennstoffzelle ein keramischer Ionenleiter als Elektrolyt zum Einsatz kommt.

Nachteilig bei dieser Anordnung der Referenzelektrode innerhalb der Elektrolytmembran ist, dass die exakte Lage der Referenzelektrode in Bezug auf die benachbart angeordneten Katalysatorschichten der Elektroden nur schwer zu kontrollieren ist. Beim Zusammenbau einer elektrochemischen Zelle - entsprechend der Figur 1 - wird die 2-lagige Elektrolytmembran in der Regel zusammengepresst, wobei der ursprünglich zunächst mittig angeordnete Platindraht dann näher zu einer der Elektroden hin verschoben werden kann. Dadurch wird es fast unmöglich, das Gleichspannungssignal von der Referenzelektrode eindeutig auszuwerten und zu interpretieren. Die Auftrennung der Halbzellen-Überspannungen kann daher nur durch eine Impedanzspektroskopie erfolgen.

Die zweite erwähnte Möglichkeit, eine Referenzelektrode innerhalb einer elektrochemischen Zelle zu positionieren, ist die, die Referenzelektrode an einer Zellseite in einem bestimmten Abstand $L_{gap}$ zu einer Arbeitselektrode anzuordnen. Dazu wird eine Konstruktion gemäß Figur 2 vorgeschlagen, bei der die beiden Arbeitselektroden, bzw. deren seitlichen Kanten aneinander ausgerichtet sind (Figur 2 mit einer Referenzelektrode auf der Anodenseite). B. Adler et al., J. Electrochem. Soc. 149, E166-E172 (2002) haben im Rahmen von Simulationen gezeigt, dass dabei der Abstand $L_{gap}$ größer sein muss, als die dreifache Membranschichtdicke $l_m$. Bei diesem Abstand sind die Inhomogenitäten, die regelmäßig durch die Kante einer Arbeitselektrode bewirkt werden, zu vernachlässigen und das Potential $\Phi$ kann als nahezu gleichförmig über die gesamte Membran angesehen werden.

In elektrochemischen Zellen, in denen Protonen als Ladungsträger fungieren, weist eine mit Wasserstoff gespeiste Referenzelektrode in der Regel ein Membranpotential $\Phi$ auf.

In der Ausgestaltung zur Positionierung einer Referenzelektrode in einer Brennstoffzelle gemäß der Figur 2 treten allerdings zwei wesentliche Probleme auf.

Soweit nichts anderes angegeben wird, wird im Folgenden davon ausgegangen, dass die Anode geerdet ist und alle Potentiale in Bezug auf die Anode gemessen werden.

Zunächst ist festzuhalten, dass selbst eine sehr kleine Verschiebung ($\delta$) in der Ausrichtung der Kanten der Arbeitselektroden bereits eine große Veränderung des Potentials an der Referenzelektrode bewirkt. Dieser Effekt wurde in der Literatur zu Festoxidbrennstoffzellen (SOFCs) schon ausreichend diskutiert. Dort wurden auch bereits einige Vorschläge zur Minimierung dieses Effektes beschrieben. Eine analoge Übertragung dieser Lösung auf Polymer-Elektrolytmembran-Brennstoffzellen (PEMFCs) wurde ebenfalls bereits in der Literatur vorgeschlagen, bei der über ein mit Hilfe der Laserablation exakt ausgerichtetes System von Arbeits- und Referenzelektroden berichtet wird.

Ein weiteres Problem, welches selbst in elektrochemischen Zellen auftritt, bei denen die Kanten der Arbeitselektroden exakt ausgerichtet sind ($\delta = 0$), ist, dass der Wert des Potentials $\Phi$, welches durch die Referenzelektrode gemessen wird, zwar einem Punkt auf der $y$-Achse zwischen den Arbeitselektroden entspricht, die genaue Position dieses Punktes auf der $y$-Achse aber nicht bekannt ist. Daher kann auch in einem solchen Fall das gemessene Gleichspannungssignal der Referenzelektrode nicht eindeutig ausgewertet und interpretiert werden. Die Auftrennung der Halbzellen-Überspannungen kann auch in diesem Fall nur durch eine Impedanzspektroskopie erfolgen.

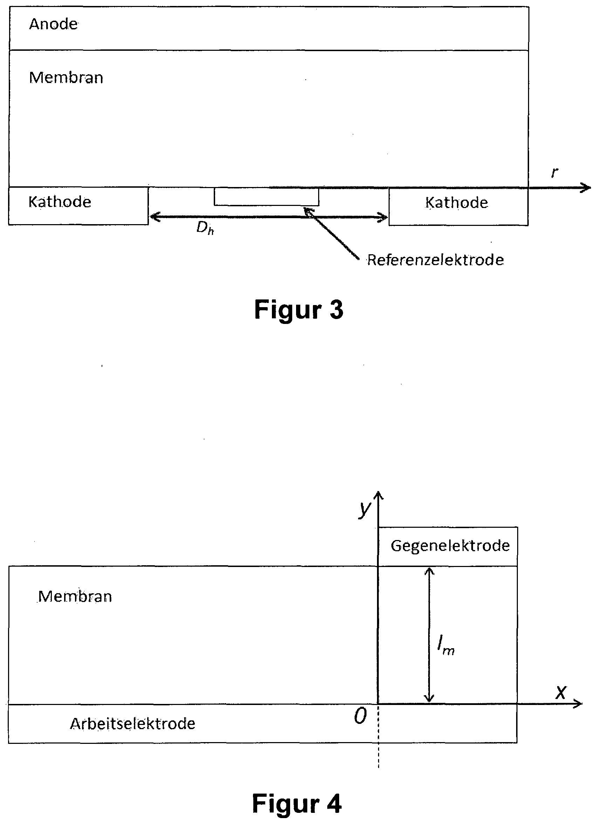

In einer Abwandlung der zweiten Möglichkeit zur Positionierung einer Referenzelektrode wurde in J. H. Ohs, U. Sauter, S. Maas und D. Stolten, J. Electrochem. Soc. 159, FI81 (2012) vorgeschlagen, die Referenzelektrode innerhalb einer großen kreisförmigen Aussparung mit einem Durchmesser ($D_h$) von 15 mm in der kathodischen Katalysatorschicht einer PEM-FC gegenüber einer anodischen Katalysatorschicht anzuordnen (siehe Figur 3). Allerdings schlug die Messung des kathodischen Potentials mit dieser Anordnung fehl. Bei allen Zellstromdichten schien das Potential der Referenzelektrode nahe bei Null zu liegen.

JP H07 282832 A offenbart ein Verfahren, wobei für die Messung eine Brennstoffzelle eingesetzt wird, die eine Elektrolytmembran umfasst, bei der auf einer Seite eine Arbeitselektrode und auf der anderen Seite eine Gegenelektrode und eine Referenzelektrode angeordnet sind.

## Aufgabe und Lösung

Die Aufgabe der Erfindung ist es, ein Verfahren für die Ermittlung der Überspannung einer Arbeitselektrode einer Brennstoffzelle bereit zu stellen, welches die bisherigen Nachteile aus dem Stand der Technik überwindet. Das Verfahren soll insbesondere bei Polymer-Elektrolytmembran-Brennstoffzelle (PEM-FC), Direktmethanol-Brennstoffzellen (DMFC) oder auch bei Hochtemperatur Festoxid-Brennstoffzellen (HT-SOFC) anwendbar sein.

Die Aufgabe der Erfindung wird gelöst durch ein Verfahren gemäß Hauptanspruch 1. Vorteilhafte Ausgestaltungen des Verfahrens finden sich in den darauf rückbezogenen Ansprüchen.

## Gegenstand der Erfindung

Im Rahmen dieser Erfindung wurde - unterstützt durch numerische Simulationen für eine Polymer-Elektrolytmembran-Brennstoffzellen (PEM-FC) - herausgefunden, dass eine Referenzelektrode, sehr wohl die Überspannung einer Arbeitselektrode mit ausreichender Genauigkeit ermitteln kann. Nachfolgend wird die Elektrode der Brennstoffzelle, an der die Überspannung ermittelt werden soll, als Arbeitselektrode bezeichnet. Demgegenüber wird unter einer Gegenelektrode eine weitere Elektrode dieser Brennstoffzelle verstanden, die für die notwendige Stromleitung benötigt wird. Sowohl die Arbeits- als auch die Gegenelektrode sind dabei Elektroden, an denen elektrochemische Vorgänge in kontrollierter Weise ablaufen. Im Folgenden wird die Arbeitselektrode mit dem Index w (w = working electrode) gekennzeichnet.

Numerische Berechnungen von J. H. Ohs, U. Sauter, S. Maas und D. Stolten, J. Electrochem. Soc. 159, FI81 (2012) zu einer experimentellen PEM-FC Anordnung gemäß der Figur 3 mit einer Kathode als Gegenelektrode und einer Anode als Arbeitselektrode, bei der die Kathode eine kreisförmige Aussparung aufweist, in dessen Zentrum eine Referenzelektrode (RE) angeordnet ist, haben gezeigt, dass das ermittelte Membranpotential $\Phi$ an der Referenzelektrode sehr ähnlich zu dem Potential der Arbeitselektrode (Anode) ist, das bedeutet $\Phi \approx 0$.

Um diesen Effekt zu erklären wurden die Berechnungen unter der Annahme vorgenommen, dass innerhalb einer Ebene der Membran (gemeint ist dabei die x-z-Ebene gemäß der Figur 2) eine sehr geringe Protonenleitfähigkeit vorliegt. Selbst unter der Annahme, dass die Protonenleitfähigkeit innerhalb der Ebene der Membran sehr hoch wäre, würde die charakteristische Länge des Membranpotentialabfalls an der Kante der kathodischen Katalysatorschicht mit ca. 100 $\mu$m sehr klein ausfallen.

Das bedeutet, dass bei Polymerelektrolytmembran-Brennstoffzellen (PEM-FC) und Hochtemperatur-Polymerelektrolytmembran-Brennstoffzellen (HT-PEM-FC), bei denen eine sehr große Austauschstromdichte der Wasserstoffoxidationsreaktion (HOR = hydrogen oxidation reaction) auftritt, das Potential der Elektrolytmembran und damit der Referenzelektrode in Figur 3 nahe bei Null liegt. Insofern ist die Messung des Kathodenpotentials, welches in solchen Brennstoffzellen die wichtigere und interessantere Größe ist, durch eine Anordnung, bei der die Referenzelektrode auf der Kathodenseite der PEM-FC Brennstoffzelle angeordnet ist, regelmäßig nicht möglich.

Die Modelvorstellungen der Brennstoffzellen mit einer Referenzelektrode basieren auf den 2D Simulationen, bei denen das Membranpotential $\Phi$ in der Ebene senkrecht zu den Arbeitselektroden und der Referenzelektrode vorliegt (x-y Ebene in Figur 2). Die numerischen Berechnungen zeigen jedoch weder eine Abhängigkeit noch eine charakteristische Größenangabe bei einer Variation für das Membranpotential $\Phi$ in solchen Systemen.

Die Erfindung löst nun das Problem, eine aussagekräftige Überspannung in einer Brennstoffzelle mit Hilfe einer Referenzelektrode messen zu können, indem eine Brennstoffzellenanordnung mit einer Elektrolytmembran vorgeschlagen wird, welche eine durch wenigstens eine einzige Kante begrenzte Gegenelektrode sowie eine durchgehende Arbeitselektrode aufweist, wie sie schematisch in Figur 4 dargestellt ist.

Benachbart zur Gegenelektrode weist die Brennstoffzelle auf der Elektrolytmembranoberfläche einen Elektroden-freien Bereich auf. Innerhalb dieses Bereichs ist die Referenzelektrode in einem Abstand $L_{gap}$ von der Kante der Gegenelektrode angeordnet. Dieser Abstand beträgt ein Vielfaches der Membrandicke. Auf der gegenüberliegenden Seite der Elektrolytmembran erstreckt sich die Arbeitselektrode. Sie liegt sowohl der Gegenelektrode als auch der Referenzelektrode gegenüber. Als Referenzelektroden kommen dabei alle gängigen Standard-Referenzelektroden in Betracht, beispielsweise eine umgekehrte Wasserstoffelektrode (RHE = reverse hydrogen electrode), bei der ein pH-Wert unabhängiges Potential gemessen wird, oder auch eine dynamische Wasserstoffelektrode (DHE = dynamic hydrogen electrode).

Zwischen den Elektroden und der Elektrolytmembran ist jeweils eine Katalysatorschicht angeordnet, die in den Figuren nicht dargestellt ist. Der Elektroden-freie Bereich weist demgegenüber keinen Katalysator auf. Die Referenzelektrode selbst weist aber ebenfalls eine Katalysatorschicht auf.

Für diese Anordnung entsprechend der Figur 4 konnte eine analytische Lösung für die Funktion $\Phi(x)$ in Abhängigkeit von x erhalten werden und es konnte eine charakteristische Länge $l_*$ entlang der x-Achse ermittelt werden. Dabei wurde ähnlich wie in Figur 2 bzw. 4 ein Koordinatensystem gewählt, bei dem die Oberfläche der Elektrolytmembran als x-z-Fläche definiert wird, und y die Achse senkrecht durch die Membran darstellt. Der 0-Punkt bezüglich der x-Achse wird durch die Projektion der Kante der Gegenelektrode festgelegt, während der 0-Punkt bezüglich der y-Achse an die Grenzfläche zwischen Membran und Arbeitselektrode gelegt wird. Die Membranschichtdicke wird mit $l_m$ gekennzeichnet.

Dabei hat sich gezeigt, dass eine Referenzelektrode, die wenigstens in einem Abstand $L_{gap}$ von der Kante der Gegenelektrode entfernt und zusammen mit dieser auf einer Seite der Elektrolytmembran angeordnet ist, und mit Wasserstoff betrieben wird, vorteilhaft ein Potential aufweist, welches nahezu exakt der Überspannung der gegenüberliegenden Arbeitselektrode entspricht.

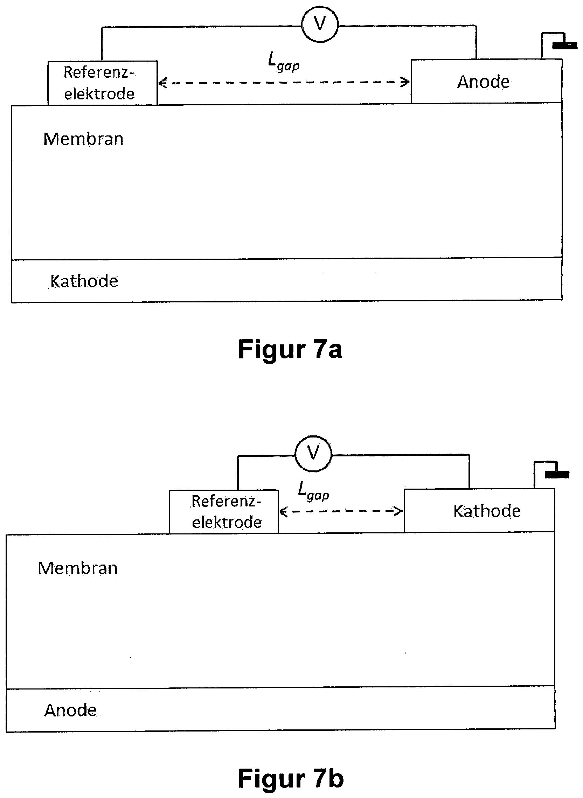

Insofern ist es möglich, bei einer Brennstoffzelle mit einer Anordnung gemäß der Figur 4, bei der die Gegenelektrode die Anode und die Arbeitselektrode die Kathode ist, mit Hilfe einer auf der Anodenseite angeordneten und mit Wasserstoff gespeisten Referenzelektrode die kathodische Überspannung hinreichend genau zu ermitteln, sofern die Referenzelektrode einen gewissen Mindestabstand $L_{gap}$ zur Anode einhält (siehe dazu auch die Figuren 7a und 7b)

Der Mindestabstand berechnet sich dabei wie folgt:

$$ L_{gap} = 3 \cdot l_* = 3 \cdot \sqrt{\frac{\sigma_m b_w l_m}{2 j_w^\infty}} , $$

mit $\sigma$

$_m$ = ionische Leitfähigkeit der Membran ($\Omega^{-1}$ cm$^{-1}$),
$b_w$ = Tafel-Steigung des Reaktion der Arbeitselektrode (V)
$l_m$ = Membrandicke (cm) und
$\dot{j}_w^\infty$ = Austauschstromdichte des Katalysators der Arbeitselektrode per unit Elektrodeoberfläche (A cm$^{-2}$).

In Polymer-Elektrolytmembran-Brennstoffzellen (PEM-FC) und in Direktmethanol-Brennstoffzellen (DMFC) liegt die Protonenleitfähigkeit in der Regel im Bereich von 0,1 $\Omega^{-1}$ cm$^{-1}$. In Festoxid-Brennstoffzellen (SOFC) ist die Protonenleitfähigkeit temperaturabhängig und liegt typischerweise zwischen 0,01 und 0,1 $\Omega^{-1}$ cm$^{-1}$.

Unter der Tafelsteigung wird die Steigung der Auftragung nach dem Tafelgesetz verstanden. Das Tafelgesetz bedeutet in der Elektrochemie, dass bei genügend hoher Überspannung der Logarithmus des Stromes eine lineare Funktion der Überspannung ist. Anstelle der Überspannung kann auch die Spannung zwischen der Arbeits- und Bezugselektrode genommen werden. Die Tafelsteigung ist definiert als

$$ b = \frac{R \cdot T}{\alpha \cdot F} $$

mit R = allgemeine Gaskonstante, F = Faraday Konstante, T = Temperatur und $\alpha$ = dimensionsloser Effektivtransferkoeffizient der (geschwindigkeitsbestimmenden) elektrochemischen Elektrodenreaktion der entsprechenden Halb-Zelle. Für die meisten wichtigen Reaktionen liegt $\alpha$ im Bereich von 0,5 bis 1.

Die typische Membranschichtdicke unterscheidet sich in den unterschiedlichen Brennstoffzellen deutlich. Während in Polymer-Elektrolytmembran-Brennstoffzellen (PEM-FC) die Schichtdicke in der Regel zwischen 10 und 30 $\mu$m beträgt, liegt sie bei Direktmethanol-Brennstoffzellen (DMFC) häufig im Bereich von 50 bis 100 $\mu$m und bei Anodengestützten Festoxid-Brennstoffzellen sogar nur im Bereich von 5 bis 10 $\mu$m.

Die Oberflächen-Austauschstromdichte des Katalysators der Arbeitselektrode $j_w^\infty$ ist gegeben durch:

$$j_w^\infty = i_* l_l \,,$$

wobei $i_*$ die volumetrische Austauschstromdichte (A cm$^{-3}$) und $l_l$ die Schichtdicke der Katalysatorschicht bedeutet. Der Parameter $i_*$ ist dabei stark anhängig von der Temperatur und der Beladung der Katalysatorschicht. Für eine PEM-FC Kathode liegt dieser Parameter $i_*$ in der Größenordnung von 10$^{-3}$ A cm$^{-3}$, in einer DMFC Kathode im Bereich von 10$^{-2}$ bis 10$^{-1}$ A cm$^{-3}$. Bei Festoxid-Brennstoffzellen Elektroden kann der Parameter $i_*$ sogar zwischen 0,1 und 1 A cm$^{-3}$ variieren. Bei Wasserstoffelektroden (Anoden) in PEM-FC und Hochtemperatur-Polymerelektrolyt-Brennstoffzelle HT-PEM-FC (HT-PEM-FC = high temperature PEM fuel cell), liegt der Parameter $i_*$ typischerweise im Bereich von 10$^3$ bis 10$^4$. Dies erklärt die sehr kleine anodische Überspannung an solchen Elektroden.

Die Elektrodenschichtdicken betragen im PEM-FCs um die 10 $\mu$m und in DMFCs zwischen 10 und 100 $\mu$m. Bei Festoxid-Brennstoffzellen (SOFCs) weisen die Kathodenfunktionsschichten in der Regel eine Dicke um 30 $\mu$m auf, während die Schichtdicken der Anodenfunktionsschichten typischerweise zwischen 10 und 20 $\mu$m liegen.

Bei den Berechnungen wurde vorausgesetzt, dass die Geometrie der Brennstoffzelle eine durch eine Kante begrenzte Gegenelektrode und eine auf der gegenüberliegenden Seite sich über diese Kante hinweg erstreckende Arbeitskathode als Gegenelektrode aufweist, entsprechend dem Modell einer Brennstoffzelle mit einer Gegenelektrode, die eine unendliche Aussparung aufweist. Dies ermöglicht es im Rahmen der Erfindung, gewisse Annahmen des Modells zu vereinfachen.

Es wird explizit darauf hingewiesen, dass die schematische Anordnung der Brennstoffzelle, so wie sie hier betrachtet wird, auch für Brennstoffzellen gilt, bei denen der Katalysator beispielsweise streifenförmig auf der Anodenseite angeordnet ist.

Ferner hat sich herausgestellt, dass das im Rahmen dieser Erfindung zunächst nur für eine PEM-FC entwickelte Design auch auf andere Brennstoffzellen, beispielsweise eine Direktmethanol-Brennstoffzelle oder auch eine Hochtemperatur-Brennstoffzelle, wie z. B. eine HT-PEM-FC oder eine Festoxid-Brennstoffzelle (SOFC) entsprechend übertragbar ist.

Im Rahmen der Erfindung wird daher zur Ermittlung der Überspannung einer Arbeitselektrode eine Brennstoffzelle mit einer Elektrolytmembran vorgeschlagen, auf der auf der einen Seite eine Arbeitselektrode angeordnet ist. Auf der gegenüberliegenden Seite erstreckt sich die Gegenelektrode nicht so weit wie die Arbeitselektrode. Die Gegenelektrode weist daher eine Kante auf. Benachbart dazu erstreckt sich auf der Membranoberfläche ein Elektroden-freier Bereich. Die Referenzelektrode zur Ermittlung der Überspannungen an der Arbeitselektrode ist dabei in einem gewissen Mindestabstand zur Kante der Gegenelektrode auf der Elektrolytmembran angeordnet

Der minimale Abstand $L_{gap}$, in dem die Referenzelektrode von der Kante der Gegenelektrode auf der Membran angeordnet wird, beträgt erfindungsgemäß 3$l_*$, wobei sich $l_*$ wie folgt berechnen lässt:

$$l_* = \sqrt{\frac{\sigma_m b_w l_m}{2 j_w^\infty}} \,,$$

mit $\sigma_m$ = Ionenleitfähigkeit der Membran, $b_w$ = Tafel-Steigung für den Reaktion der Arbeitselektrode, $l_m$ = Membranschichtdicke sowie mit der Austauschstromdichte $j_w^\infty$ für den Katalysator der Arbeitselektrode.

Während der Messung zur Ermittlung der Überspannung wird die Referenzelektrode mit Wasserstoff gespeist. Der Gegen- und der Arbeitselektrode werden je nach Schaltung als Anode bzw. Kathode ein Betriebsmittel und ein Oxidationsmittel zugeführt. Während der Messung wird das Potential der Referenzzelle gegenüber der geerdeten Gegenelektrode gemessen.

Dabei werden eine PEM-Brennstoffzelle üblicherweise mit Wasserstoff und Luft, bzw. Sauerstoff, eine DMFC mit Methanol bzw. mit einem Methanol-Wassergemisch und Luft, bzw. Sauerstoff und eine HT-FC mit Wasserstoff und Luft, bzw. Sauerstoff betrieben.

Insbesondere für die Fallgestaltung, dass die Gegenelektrode als Anode und die Arbeitselektrode als Kathode geschaltet sind, entspricht das gemessene Potential der Referenzzelle mit ausreichender Genauigkeit der Überspannung der Kathode.

Spezieller Beschreibunasteil

Nachfolgend werden das Brennstoffzellenmodell und grundlegende Gleichungen erläutert, die der numerischen Berechnung als Basis für das erfindungsgemäße Brennstoffzelldesign zugrunde liegen.

Dabei werden die folgenden Indizes verwendet:

a     Anode,
c     Kathode,
HOR     Wasserstoffoxidationsreaktion (engl. hydrogen oxidation reaction),
hy     Wasserstoff,
m     Membran,
ORR     Sauerstoffreduktionsreaktion (engl. oxygen reduction reaction),
ox     Sauerstoff,
ref     Referenzelektrode
w     Arbeitselektrode (working electrode)

Ferner werden die folgenden Zeichen verwendet:
$b$     Tafel Steigung der Halbzelle für die anodischen bzw. kathodischen Reaktion (V),
$E^{eq}$     Gleichgewichtspotential einer Halbzelle (V),
$F$     Faraday Konstante,
$J$     mittlere Stromdichte im Arbeitsbereich (A cm$^{-2}$),
$j_a$     lokale Protonen-Stromdichte auf der Anodenseite (A cm$^{-2}$),
$j_c$     lokale Protonen-Stromdichte auf der Kathodenseite (A cm$^{-2}$),
$j_{hy}$     Wasserstoff Austauschstromdichte (A cm$^{-2}$),

$\overset{\bullet}{j}_{hy}^{\infty}$     Wasserstoff Austauschstromdichte im Arbeitsbereich (A cm$^{-2}$),

$\overset{\bullet}{j}_{ox}^{\infty}$     Sauerstoff Austauschstromdichte im Arbeitsbereich (A cm$^{-2}$),

$\overset{\bullet}{j}_{w}^{¥}$     Austauschstromdichte der Arbeitselektrode im Arbeitsbereich (A cm$^{-2}$),
$L_{gap}$     Mindestabstand zwischen der Kante der Gegenelektrode und der Kante der Referenzelektrode,
$l_m$     Membranschichtdicke (cm),
$R$     Gaskonstante,
$x$     Koordinate entlang der Membran (cm), mit
$x = 0$ Kante der Gegenelektrode ($\tilde{x} = 0$)
$x < 0$ Elektroden-freier Bereich mit der Referenzelektrode
$x \to \infty$ Arbeitsbereich
$y$     Koordinate senkrecht zur Membranoberfläche (cm).

Zudem werden die nachfolgend aufgeführten griechischen Zeichen verwendet:

$\eta$     lokale Überspannung (V),

$\sigma_m$     ionische Leitfähigkeit der Membran ($\Omega^{-1}$ cm$^{-1}$),

$\Phi$     Membranpotential (V),

$\phi$     Potential der Kohlenstoffphase (V),

$\phi_{ref}$     Potential der Kohlenstoffphase der Referenzelektrode (V).

Tabelle 1 Ausgewählte physikalische Parameter für die Berechnungen

| | | | |
|---|---|---|---|
| ORR Austauschstromdichte | $\overset{\bullet}{j}_{ox}^{\infty}$ | A cm$^{-2}$ | $10^{-6}$ |
| ORR Gleichgewichtspotential | $E_{ox}^{eq}$ | V | 1,23 |

(fortgesetzt)

| ORR Tafel-Steigung der Halbzelle | $b_{ox}$ | V | 0,03 |
|---|---|---|---|
| HOR Austauschstromdichte im regulären Arbeitsbereich | $j_{hy}^{\infty}$ | A cm$^{-2}$ | 1,0 |
| HOR Tafel-Steigung der Halbzelle | $b_{hy}$ | V | 0,015 |
| Membranschichtdicke | $l_m$ | cm | 0,0025 (25 μm) |
| Protonenleitfähigkeit der Membran | $\sigma_m$ | $\Omega^{-1}cm^{-1}$ | 0,1 |
| Zell potential | $\phi_c$ | V | 0,83446 |
| Mittlere Stromdichte im Arbeitsbereich | J | A cm$^{-2}$ | 1 |

## 1. Zellmodell und Grundgleichungen

Es wird eine PEM-FC betrachtet, die eine Geometrie und ein Koordinatensystem aufweisen, wie es in der Figur 4 dargestellt ist. Auf beiden Seiten der Polymerelektrolyt-Membran mit der Schichtdicke $l_m$ sind die Elektroden angeordnet. Zwischen den Elektroden und der Membran befindet sich regelmäßig eine entsprechende Katalysatorschicht, insbesondere die anodische Katalysatorschicht (ACL= anode catalyst layer) sowie die kathodische Katalysatorschicht (CCL= cathode catalyst layer).

Es wird der Fall betrachtet, dass sich die Kathode über den gesamten Bereich der Membran erstreckt und die Anode jedoch nur einen Teil der Oberfläche der Membran kontaktiert. Damit ergibt sich auf der Anodenseite auf der nicht durch die Anode kontaktierter Fläche der Membran eine Art Aussparung. Die seitliche Kante der Anode zur Aussparung hin definiert die Stelle $x = 0$. Der Bereiche für $x < 0$ wird als Anoden-freier Bereich (Aussparung) bezeichnet und der Bereich für $x > 0$ als Arbeitsbereich bezeichnet. Diese Anordnung ist schematisch in der Figur 4 dargestellt.

Für eine weitere Ausgestaltung der Erfindung, bei der sich die Anode über den gesamten Bereich der Membran erstreckt, die Kathode jedoch begrenzt ist, und somit eine Kante gegenüber der Aussparung auf der Kathodenseite aufweist, würde analog der Bereich mit $x < 0$ als Kathoden-freier Bereich bezeichnet und der Bereich für $x > 0$ weiterhin als Arbeitsbereich bezeichnet.

Die Herleitung der grundlegenden Gleichung (1) ist bereits aus der Literatur bekannt. Die wichtigsten Schritte werden nachfolgend kurz erläutert.

Bei Nichtvorliegen eines Druckgradienten ist der Hauptparameter, der die Verteilung des lokalen Stroms innerhalb der Membran bestimmt, das Membranpotential Φ. Da innerhalb der Membran weder ein Strom erzeugt, noch verbraucht wird, gilt für Φ die Laplace-Gleichung

$$\frac{\partial^2 \Phi}{\partial x^2} + \frac{\partial^2 \Phi}{\partial y^2} = 0 \qquad\qquad (1)$$

Bei Annäherung der zweiten Ableitung entlang der y-Achse durch die Differenz der lokalen Protonenströme, die in die Membran hinwein und wieder heraustreten kann die Gleichung (1) vereinfacht werden zu

$$\frac{\partial^2 \Phi}{\partial x^2} = \frac{j_c - j_a}{\sigma_m l_m} \qquad\qquad (2)$$

wobei $\sigma_m$ die Protonenleitfähigkeit der Membran, und $j_a$ und $j_c$ die Protonenstromdichten an der Anoden- bzw. und der Kathodenseite der Membran darstellen. Zudem wird vermutet, dass $j_a$ und $j_c$ der Butler-Volmer Kinetik folgen

$$j_a = 2\, j_{hy} \sinh\left(\frac{\eta_a}{b_{hy}}\right) \text{ und} \qquad\qquad (3)$$

$$j_c = 2\,j_{ox}\,\sinh\left(-\frac{\eta_c}{b_{ox}}\right). \tag{4}$$

Hierbei bedeuten $j_{hy}$ und $j_{ox}$ jeweils die entsprechenden Oberflächen-Austauschstromdichten der anodischen Katalysatorschicht (ACL) und der kathodischen Katalysatorschicht (CCL), $\eta_a$ und $\eta_c$ sind die entsprechenden lokalen Elektroden-Überspannungen an der Anode und der Kathode und $b_{hy}$ und $b_{ox}$ sind die dazu korresponierenden Tafel Steigungen der entsprechenden Halbzellenreaktion. Da angenommen wird, dass die Transportverluste sehr klein sind, ist die Abhängigkeit von der Reaktandenkonzentration bereits in $j_{hy}$ und $j_{ox}$ enthalten.

Die Überrspannungen ergeben sich aus

$$\eta_a = \phi_a - \Phi - E^{eq}_{HOR} \tag{5}$$

$$\eta_c = \phi_c - \Phi - E^{eq}_{ORR} \tag{6}$$

wobei $\phi_a$ und $\phi_c$ die Elektrodenpotentiale and $E^{eq}_{HOR} = 0\ V$ und $E^{eq}_{ORR} = 1{,}23\ V$ die Gleichgewichtspotentiale der entsprechenden Halbzellenreaktionen darstellen. Es wird angenommen, dass die Anode geerdet ist ($\phi_a$) = 0 und daher $\phi_c$ das Zellenpotential darstellt.

Durch Einfügen von Gl. (3) bis Gl. (6) in Gl. (2) und Einführung der dimensionslosen Variablen

$$\tilde{x} = \frac{x}{l_m}, \qquad \tilde{j} = \frac{j\,l_m}{\sigma_m b_{ox}}, \qquad \tilde{\Phi} = \frac{\Phi}{b_{ox}}, \qquad \tilde{\phi} = \frac{\phi}{b_{ox}}, \qquad \tilde{b}_{hy} = \frac{b_{hy}}{b_{ox}} \tag{7}$$

erhält man

$$\frac{d^2\tilde{\Phi}}{d\tilde{x}^2} = 2\tilde{j}^{\,\infty}_{ox}\sinh\left(-\tilde{\phi}_c + \tilde{\Phi} + \tilde{E}^{eq}_{ORR}\right) - 2\tilde{j}^{\,\infty}_{hy}\sinh\left(-\tilde{\Phi}/\tilde{b}_{hy}\right) \tag{8}$$

Hierbei ist $\tilde{j}^{\,\infty}_{ox}$ mt dem hochgestellten Zeichen $\infty$ versehen, um anzuzeigen, dass dieser Parameter unabhängig von der Koordinatenlage $\tilde{x}$ ist.

In dem Anoden-freien Bereich (siehe Figur 4) geht die anodische Austauschstromdichte für $\tilde{x} < 0$, gegen Null. In diesem Fall ergibt sich für $\tilde{j}_{hy}$

$$\tilde{j}_{hy} = \tilde{j}^{\,\infty}_{hy}\,H(\tilde{x}) \tag{9}$$

wobei $\tilde{j}^{\,\infty}_{hy}$ die Austauschstromdichte der Wasserstoff-Oxidationsreaktion (HOR = hydrogen oxidation reaction) in dem Arbeitsbereich und $H$ die Heaviside-Funktion:

$$H(\tilde{x}) = 0 \text{ für } \tilde{x} < 0 \qquad \text{und} \qquad H(\tilde{x}) = 1 \text{ für } \tilde{x} \ge 0.$$

Im Folgenden wird - soweit nichts anderes vermekt ist - angenommen, dass das Zellpotential $\phi_c$ konstant ist.

**2. Analytische Lösung**

**a. Anoden-freier Bereich** ($\tilde{x} < 0$)

In dem Anoden-freien Bereich geht der WasserstoffStrom $\tilde{j}_a$ gegen Null und die Gl. (8) vereinfacht sich zu

$$\frac{d^2\tilde{\Phi}}{d\tilde{x}^2} = 2\tilde{j}_{ox}^\infty \sinh\left(-\tilde{\phi}_c + \tilde{\Phi} + \tilde{E}_{ORR}^{eq}\right). \tag{10}$$

Zweckmäßigerweise kann Gl. (10) in Form der Kathoden-Überspannung (6) umgeschrieben werden, welche sich in der dimensionslosen Form wie folgt ergibt

$$\tilde{\eta}_c = \tilde{\phi}_c - \tilde{\Phi} - \tilde{E}_{ORR}^{eq}. \tag{11}$$

Damit kann Gl. (10) überführt werden in

$$\frac{d^2\tilde{\eta}_c}{d\tilde{x}^2} = 2\tilde{j}_{ox}^\infty \sinh(\tilde{\eta}_c), \qquad \tilde{\eta}_c(0) = \tilde{\eta}_c^0, \qquad \tilde{\eta}_c(-\infty) = 0. \tag{12}$$

Die Rahmenbedingungen für das in Gl. (12) aufgestellte Problem legen die kathodische Überspannung an der Stirnfläche zur Anodenkante ($\tilde{x} = 0$) fest und legen gleichzeitig die Überspannung bei $\tilde{x} \to \infty$ auf Null, wo der Kathodenstrom $\tilde{j}_c$ Null ist.

Formal gesehen entspricht die Gleichung (12) in analoger Weise dem Gouy-Chapman Problem für die Potentialverteilung in der diffusen Doppelschicht an einer Metall/Elektrolyt-Grenzfläche. In diesem Fall entspricht der "Metallteil" des Bereichs dem Arbeitsbereich der Zelle bei ($\tilde{x} \geq 0$), während analog zum "Elekttolytteil" hier der anodenfrie Bereich mit ($\tilde{x} < 0$) vorliegt.

Die Lösung der Gl. 12 ergibt sich zu

$$\tilde{\eta}_c(\tilde{x}) = 2\ln\left(\frac{1 - B\exp\left(\tilde{x}\sqrt{2\tilde{j}_{ox}^\infty}\right)}{1 + B\exp\left(\tilde{x}\sqrt{2\tilde{j}_{ox}^\infty}\right)}\right), \text{ für } \tilde{x} \leq 0, \tag{13}$$

Die Gleichung (13) erfüllt die Rahmenbedingung für $\tilde{x} = -\infty$. Die Konstante B in der Gleichung (13) erhält man durch die angepassten Bedingungen.

Die charakteristische Länge $\tilde{l}_*$ bestimmt demgegenüber den exponetiellen Kurvenverlauf von $\tilde{\Phi}$ im Bereich der Aussparung, d. h. dem Anoden-freien Bereich ($\tilde{x} < 0$). Aus der Gleichung (13) folgt, dass diese Größe bestimmt wird durch $\tilde{l}_* = 1/\sqrt{2\tilde{j}_{ox}^\infty}$. Als dimensionsbehaftete Größe (z. B. in cm) ergibt sich damit $l_*$ zu:

$$l_* = \sqrt{\frac{\sigma_m b_{ox} l_m}{2j_{ox}^\infty}} \tag{14}$$

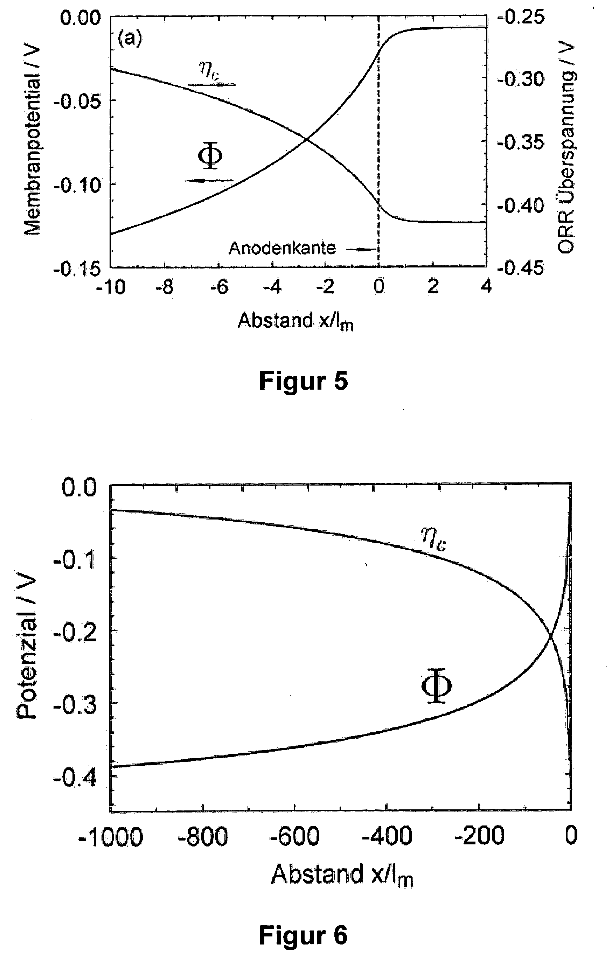

Daraus ergibt sich, dass der vollständige erhöhte Abfall n des absoluten Potentials $\Phi(x)$ und der Abfall der absoluten Überspannung $\tilde{\eta}_c(\tilde{x})$ auf einen konstanten Grenzwert, der einen Kathodenstrom von Null in dem Anoden-freien Bereich definiert, näherungsweise an einer Stelle auftritt, die in einem Abstand $L_{gap}$ in der Größenordnung von $3l_*$ von der Anodenkante entfernt liegt (siehe Figur 6). Mit den Werten aus der Tabelle 1 berechnet sich der Abstand $L_{gap}$ zu 6 cm. Diese Abschätzung basiert jedoch auf der Annahme, dass die Membran ausreichend befeuchtet vorliegt.

Entsprechend der Gleichung (14) kann die Länge $l_*$ beispielsweise durch eine Verringerung der Membranleitfähigkeit $\sigma_m$ verringert werden, oder aber durch einen Vergrößerung der Katalysatormenge in der kathodischen Katalysatorschicht zur Erhöhung der Austauschstromdichte der Sauerstoffreduktionsreaktion $j_{ox}^{\infty}$ verringert werden.

**b. Das Potential der Referenzelektrode**

Es wird nun ein Brennstoffzellensystem betrachtet, bei dem die Referenzelektrode in einem Abstand $L_{gap} \sim 3l_*$ von der Kante der Gegenelektrode entfernt angeordnet ist (siehe Figur 7a). Es wird angenommen, dass die Anode geerdet ist, die Referenzelektrode mit Wasserstoff versorgt wird und nur ein geringer Strom durch diese Elektrode fließt, der benötigt wird um das Referenerelektrodenpotential zu messen. In diesem Fall können der Potentialverlust für die Aktivierung der Wasserstoff-Oxidationsreaktion an der Referenezelektrode und all die übrigen resistiven Verluste zwischen der Referenzelektrode und der Membranpotential getrost vernachlässigt werden. Der Potentialabfall zwischen der Referenzelektrode und der Gegenelektrode entspricht dann der kathodischen Überspannung $\eta_c$ in dem Arbeitsbereich (Figur 7a).

Um das zu verdeutlichen kann Gleichung (6) für $\tilde{x} \to -\infty$ und für $\tilde{x} \to \infty$ umgeschrieben werden zu:

$$\eta_c^{-\infty} = \phi_c - \Phi^{-\infty} - E_{ORR}^{eq} = 0 \tag{15a}$$

$$\eta_c^{\infty} = \phi_c - \Phi^{\infty} - E_{ORR}^{eq} \tag{15b}$$

Löst man die Gleichungen (15a) und (15b) nun nach $\phi_c$ auf und setzt sie gleich, so erhält man

$$\eta_c^{\infty} = \Phi^{-\infty} - \Phi^{\infty} \cong \Phi^{-\infty} \tag{16}$$

da, in PEM-FC und HT-PEM-FC $\Phi^{\infty} \approx 0$ ist (siehe Figur 4). Die Richtigkeit der Gleichung (16) wird beim Betrachten der Figur 6 deutlich. Gleichzeitig ist bei kleinem Strom in der mit Wasserstoff versorgten Referenzelektrode das Potential der Refereentelektrode $\phi_{ref} \cong \Phi^{-\infty}$. Zusammen mit Gleichung (16) erhält man dann $\phi_{ref} \cong \eta_c^{\infty}$.

Der wichtigste Parameter für die erfindungsgemäße Anordnung der Referenzelektrode, wie in der Figur 7a dargestellt, ist somit die charakteristische Länge $l_*$ (siehe Gleichung (14)), die die Variation der Überspannungen in dem Elektroden-freien Bereich benachbart zur Gegegnelektrode (siehe Figur 4, für $x < 0$) wiederspiegelt. Es wird erneut herausgestellt, dass $l_*$ unabhängig von der Konstante $B$ ist, die in der Gleichung (13) auftaucht, und daher auch unabhängig von den dort gemachten Annahmen zur Veränderung von $\tilde{\eta}$ in der Nähe der Kante der Gegenelektrode, in der Ausführung gemäße der Figur 7a also der Anode.

Daher ist die die Lösung für den - von der Kante der Gegenelektrode - weit entfernten Bereich, d. h. für $-\ddot{x} > 1$, zusammen mit schematischen Anordnung aus Figur 7a vorteilhaft auch auf alle anderen Arten von Brennstoffzellen anzuwenden.

Bei anderen Brennstoffzellen als einer PEM-Brennstoffzelle oder einer HT-PEM-Brennstoffzelle kann das Potential $\Phi^{\infty}$ jedoch nicht vernachlässigt werden, so dass sich aus der Gleichung (16) dann Folgendes ergibt:

$$\phi_{ref} = \eta_c^{\infty} + \Phi^{\infty} \tag{17}$$

Für einen solchen Fall würde beispielsweise durch die Referenzelektrode die Summe der Überspannungen der Arbeitskathode und des Membranpotentials zwischen den Arbeitselektroden gemessen werden.

Der einzige spezielle Beitrag in den vorhergehenden Gelichungen, der von dem besonderen Typ der betrachteten Brennstoffzelle abhängt, ist der Wert $L_{gap} = 3l_*$, der in Gleichung (14) auftritt und der bestimmt wird durch die charakteristischen Transportparameter und die kinetischen Parameter der betrachteten Brennstoffzelle bzw. Elektrode.

Aus dem in Figur 6 dargestellten Verlauf des Membranpotentials $\Phi$ gegen die normierte Entfernung von der Kante der Gegenelektrode für eine PEM-Brennstoffzelle wird deutlich, dass bereits für einen Abstand $L_{gap} \gtrsim l_*$ die Überspannung $\Phi(L_{gap})$ nahezu $\cong \eta^{\infty}$ entspricht, so dass das die Anforderung, dass der Abstand $L_{gap}$ mindesten 3 mal $l_*$ entsprechend sollte, sogar mehr als ausreichend ist.

Das erfindungsgemäße Brennstofzellendesign, so wie es in der Figur 7a abgebildet ist, weist zwei besondere Vorteile gegenüber der Anordnung gemäß der Figur 2 aus dem Stand der Technik auf. Zum einen wird die Schwierigkeit der exakten Ausrichtung der gegenüberliegenden Kanten der beiden Elektroden vermieden, da zumindest die Arbeitselektrode in diesem Bereich kontinuierlich, also ohne eine Kante, ausgestaltet ist. Dies führt zu einer deutlichen Vereinfachung der Zellanordnung und ermöglicht gleichzeitig eine zuverlässige und vertrauenswürdige Interpretation der Messergebnisse. Auf der anderen Seite entspricht in einer PEM-Brennstoffzelle mit einer entsprechenden Anordnung gemäß der Figur 7a dann das gemessene Potential an der Referenzelektrode nahezu der Überspannung der Kathode.

Der einzige Nachteil in dieser erfindungsgemäßen Brennstoffzellenanordnung ist der relativ große Abstand $L_{gap}$ zwischen der Referenzelektrode und der benachbart angeordneten Arbeitselektrode, der für eine aussagekräftige Messung der Referenzelektrode einzuhalten wäre.

Betrachtet man nun eine Brennstoffzellenanordnung, bei der Anode und Kathode gegenüber dem Vorgesagten vertauscht sind (siehe Figur 7b), so erkennt man, dass nun der benötigte Abstand $L_{gap}$ um ca. 3 Größenordnungen kleiner ausfällt, als bei der Anordnung gemäß der Figur 7a. Für die Ausgestaltung gemäß der Figur 7b ergibt sich die Gleichung (14) zu

$$l_{**} = \sqrt{\frac{\sigma_m b_{hy} l_m}{2 j_{hy}^{\infty}}} \qquad (18)$$

mit der Wasserstoffaustauschdichte im Arbeitsbereich $j_{hy}^{\infty}$ im Nenner, die ca. 6 Größenordnungen größer ausfällt, als die entsprechende Sauerstoffaustauschstromdichte $j_{ox}^{\infty}$.

Bei einer typischen PEM-Brennstoffzelle liegt der Parameter $L_{gap} = 3l_{**}$ in der Größenordnung von ca. 60 μm. Darüber hinaus weist das Potential der Referenzelektrode bei einer Anordnung gemäß der Figur 7a einen Wert nahe bei Null auf. Analog zur Gleichung (17) ergibt sich somit für das Potential der Referenzelektrode in Figur 7b

$$\phi_{ref} = \eta_a^{\infty} + \Phi^{\infty} \qquad (19)$$

Da hier die beiden Terme auf der rechte Seite sehr klein sind, wird auch klar, warum der Versuch die kathodische Überspannung gemäß einer bislang bekannten Anordnung, wie in Figur 3 dargestellt, zu messen, regelmäßig scheitern muss.

Zur Verdeutlichung der Erfindung dienen zudem einige ausgewählte Figuren, die aber keine Einschränkung des Gegenstandes der Erfindung bedeuten sollen. Es zeigen:

Fig. 1:   Beispielhafte schematische Brennstoffzellenanordnung mit einer Referenzelektrode (aus dem Stand der Technik).

Fig. 2:   Beispielhafte schematische Brennstoffzellenanordnung mit einer Referenzelektrode (aus dem Stand der Technik).

Fig. 3:   Beispielhafte schematische Brennstoffzellenanordnung mit einer Referenzelektrode (aus dem Stand der Technik).

Fig. 4:   Schematische Brennstoffzellenanordnung mit einer Gegenelektrode mit Kante sowie einen kontinuierlichen Arbeitselektrode.

Fig. 5:   Verlauf des Membranpotentials $\Phi$ und der lokalen Überspannung auf der Kathodenseite $\eta_c$ im Bereich um die Anodenkante jeweils aufgetragen gegen den normierten Abstand von der Kante der Anode, am Beispiel einer PEM-FC.

Fig. 6:   Verlauf des Membranpotentials $\Phi$ und der lokalen Überspannung auf der Kathodenseite $\eta_c$ jeweils aufgetragen gegen den normierten Abstand von der Kante der Anode, am Beispiel einer PEM-FC.

Fig. 7:   Beispielhafte schematische erfindungsgemäße Brennstoffzellenanordnungen mit einer Referenzzelle, in einer Ausführung mit einer Anode als Gegenelektrode (a) und in einer Ausführung mit einer Kathode als Gegenelektrode (b).

Die Figuren 1 bis 3 zeigen schematisch unterschiedliche Anordnungen einer Referenzelektrode innerhalb einer Brennstoffzelle, wie sie aus dem Stand der Technik bekannt sind.

In Figur 1 ist ein isolierter Platindraht mit einer nicht isolierten Spitze als Referenzelektrode mittig zwischen zwei Membranschichten eingebettet. Diese Ausgestaltung bietet sich beispielsweise bei Brennstoffzellen mit einer relativ dicken Membranschicht an, wie sie in Polymerelektrolytmembran-Brennstoffzellen üblich sind.

Die Figur 2 zeigt schematisch eine Anordnung, bei der auf beiden Seiten einer Elektrolytmembran jeweils eine Arbeitselektrode (Anode und Kathode) angeordnet sind. Sowohl die Anode, als auch die Kathode decken dabei nicht die jeweilige gesamte Oberfläche der Membran ab, sodass auf beiden Seiten der Membran jeweils ein Elektroden-freier Bereich vorliegt. Es wird ein Koordinatensystem gewählt, bei dem die Oberfläche der Membran als x-z-Fläche definiert wird, und y die Achse senkrecht durch die Membran darstellt. Der 0-Punkt bezüglich der x-Achse wird durch die Projektion der Kante der Anode festgelegt, während der 0-Punkt bezüglich der y-Achse an die Grenzfläche zwischen der Membran und der Kathode gelegt wird. Die Membranschichtdicke wird mit $l_m$ gekennzeichnet. Die beiden Elektroden sind dabei in der Regel nicht exakt zueinander ausgerichtet. Ihre senkrechten Kanten weisen daher in x-Richtung eine kleine Abweichung $\delta$ auf. Innerhalb des freien Bereichs auf der Anodenseite ist die Referenzelektrode auf der Membran angeordnet. Der Abstand zwischen der auf die Anode gerichteten Kante der Referenzelektrode und der auf die Referenzelektrode gerichteten Kante der Anode sollte laut Literaturangaben dann $L_{gap}$ + $\delta$ betragen, wobei der Abstand $L_{gap}$ dem Dreifachen der Membranschichtdicke $l_m$ entsprechen sollte. Bei Festoxid-Brennstoffzellen (SOFC) beträgt die Membrandicke typischerweise 1 bis 10 $\mu$m, bei einer Polymer-Elektrolyt-Brennstoffzelle (PEM-FC) 10 bis 50 $\mu$m und bei einer Direkt-Methanol-Brennstoffzelle (Direkt-Methanol-Brennstoffzelle) typischerweise 50 bis 100 $\mu$m.

Die Figur 3, die ebenfalls eine Anordnung einer Brennstoffzelle mit einer Referenzzelle aus dem Stand der Technik beschreibt, zeigt schematisch eine rotationssymmetrische Brennstoffzelle. Während auf einer Seite der Membran diese vollständig mit einer Anode bedeckt ist, weist die auf der gegenüberliegenden Seite der Membran angeordnete Kathode eine kreisförmige Aussparung (Elektroden-freier Bereich) mit einem Durchmesser $D_h$ auf. In dieser Aussparung ist zentral die Referenzelektrode angeordnet.

In Figur 4 ist schematisch eine Membran-Elektrodeneinheit einer Brennstoffzelle dargestellt, so wie sie der hier vorliegenden Erfindung zugrunde gelegt wird. Die Membran weist eine Schichtdicke von $l_m$ auf. Während die Kathode die gesamte Oberfläche der Membran abdeckt, überdeckt die Anode nur einen Teilbereich der gegenüberliegenden Oberfläche der Membran ab. Analog zur Brennstoffzelle gemäß Figur 2 wird auch hier ein Koordinatensystem gewählt, bei dem die Oberfläche der Membran als x-z-Fläche definiert wird, und y die Achse senkrecht durch die Membran darstellt. Der 0-Punkt bezüglich der x-Achse wird durch die Projektion der Kante der Anode festgelegt, während der 0-Punkt bezüglich der y-Achse an die Grenzfläche zwischen der Membran und der Kathode gelegt wird. Der Bereich $x > 0$ wird als Arbeitsbereich, der Bereich $x < 0$ als Elektroden-freier Bereich bezeichnet. In diesem Bereich wird erfindungsgemäß die Referenzelektrode angeordnet.

Der Verlauf des Membranpotentials $\Phi$ und der Überspannung $\eta_w$ der Sauerstoffreduktionsreaktion (ORR) an der Arbeitselektrode (hier Kathode, also $\eta_w = \eta_c$) in Anhängigkeit von der normierten Länge $x/l_m$ im Bereich der Anodenkante sind gemäß der Anordnung aus Figur 4 in der Figur 5 dargestellt. Während die Kurven im Arbeitsbereich ($x/l_m > 0$) nahezu konstant verlaufen, zeigen sie im Anoden-freien Bereich einen exponentiell-artigen Verlauf mit der Annäherung an einen Grenzwert bei Werten $x/l_m < 0$.

In Ergänzung zu Figur 4 zeigt die Figur 5 den Verlauf des Membranpotentials $\Phi$ und der Überspannung $\eta_w$ der Sauerstoffreduktionsreaktion (ORR) an der Arbeitselektrode (Kathode) in Anhängigkeit von der normierten Länge $x/l_m$ bis in größere Abstände von der Anodenkante $x/l_m \ll 0$ (entspricht dem Elektroden-freien Bereich). Die Anodenkante entspricht dabei $x/l_m = 0$.

In der Figur 7 sind exemplarisch zwei erfindungsgemäße Brennstoffzelleanordnungen dargestellt, wie sie vorteilhaft für die Ermittlung der Überspannung eingesetzt werden können. Bei der Figur 7a wurde die Arbeitselektrode als Kathode und die Gegenelektrode als Anode geschaltet, die geerdet vorliegt. Im Falle einer PEM-FC würden sowohl die Anode als auch die Referenzelektrode mit Wasserstoff versorgt, während der Kathode ein Oxidationsmittel, z. B. Sauerstoff zugeführt wird. Der gemäß der Formel benötigte Mindestabstand zwischen Referenzelektrode und Anode ist bei der erfindungsgemäßen Anordnung durch $L_{gap}$ gekennzeichnet.

Diese vorgeschlagene Anordnung zur Ermittlung von Überspannungen eignet sich dabei sowohl für Messungen in einer PEM-FC, einer DMFC und auch in einer HT-PEM-FC.

Bei der in Figur 7b dargestellten Brennstoffzellenanordnung wurde umgekehrt zu Figur 7a die Arbeitselektrode als Anode und die Gegenelektrode als Kathode geschaltet, die geerdet vorliegt. Die Referenzelektrode wird auch in diesem Fall mit Wasserstoff versorgt, während der Anode ein Betriebsmittel und der Kathode ein Oxidationsmittel, z. B. Sauerstoff zugeführt wird.

Der gemäß der Formel benötigte Mindestabstand zwischen Referenzelektrode und Anode ist wiederum durch $L_{gap}$ gekennzeichnet. In der Regel fällt bei dieser Ausgestaltung (Figur 7b) der Mindestabstand deutlich geringer, insbesondere um Größenordnungen geringer aus, als bei einer Anordnung gemäß der Figur 7a, da die Austauschstromdichte $j_w^{\yen}$ im Nenner für den Wasserstoff an der Arbeitselektrode typischerweise 6 Größenordnungen größer ausfällt, als die entsprechende Austauschstromdichte $j_w^{\yen}$ im Nenner für den Sauerstoff an der Arbeitselektrode gemäß Figur 7a.

Diese Anordnung eignet sich insbesondere für Messungen in einer DMFC. Für Untersuchungen an einer PEM-FC und HT-PEM-FC ist diese Anordnung generell weniger geeignet, da die Überspannung von mit Wasserstoff betriebenen Elektroden regelmäßig sehr nahe bei Null liegt.

Im Rahmen der Erfindung ist der vorgeschlagene Abstand $L_{gap}$ nur als Mindestabstand zu sehen, um bei den Ergebnissen zu gewährleisten, dass sie tatsächlich der Überspannung der Arbeitselektrode entsprechen.

Soweit der Platz dafür gegeben ist, kann die Referenzelektrode darüber hinaus natürlich auch in einem weiteren Abstand von der Kante der Gegenelektrode angeordnet werden, erfindungsgemäß in einem Bereich zwischen $3 \cdot l_*$ und $10 \cdot l_*$.

## Patentansprüche

1. Verfahren zur Ermittlung der Überspannung einer Arbeitselektrode in einer Brennstoffzelle, wobei für die Messung eine Brennstoffzelle eingesetzt wird,

   - die eine Elektrolytmembran umfasst, bei der auf einer Seite eine durchgehende Arbeitselektrode und auf der anderen Seite eine Gegenelektrode sowie eine Referenzelektrode angeordnet sind,
   - die eine Gegenelektrode mit wenigstens einer seitlichen Kante aufweist,
   - bei der die Elektrolytmembranoberfläche benachbart zur Gegenelektrode einen Elektroden-freien Bereich aufweist,
   - und bei der die Referenzelektrode auf der Elektrolytmembranoberfläche im Bereich des Elektroden-freien Bereichs angeordnet ist und
   - bei der das Potential der Referenzelektrode gegenüber der geerdeten Gegenelektrode gemessen wird, wobei
   - für die Ermittlung der Überspannung eine Festoxid-Brennstoffzelle mit einer Elektrolytmembran mit einer Schichtdicke $l_m$ von 1 µm bis 10 µm oder eine Polymer-Elektrolyt-Brennstoffzelle mit einer Elektrolytmembran mit einer Schichtdicke $l_m$ von 10 µm bis 50 µm oder eine Direkt-Methanol-Brennstoffzelle mit einer Elektrolyt-membran mit einer Schichtdicke $l_m$ von 50 µm bis 100 µm eingesetzt wird, - die Referenzelektrode in einem Abstand zwischen $3 \cdot l_*$ und $10 \cdot l_*$ zur Kante der Gegenelektrode angeordnet ist, wobei $l_*$ gegeben ist durch

$$l_* = \sqrt{\frac{\sigma_m b_w l_m}{2 j_w^\infty}}$$

   mit

   $\sigma_m$ = ionische Leitfähigkeit der Elektrolytmembran ($\Omega^{-1}$ cm$^{-1}$),
   $b_w$ = Tafel-Steigung der Halb-Zelle für die elektrochemische Reaktion der Arbeitselektrode (V),
   $l_m$ = Membranschichtdicke (cm) und
   $j_w^\infty$ = Austauschstromdichte des Katalysators der Arbeitselektrode pro Einheit Elektrodenoberfläche in (A cm$^{-2}$).

2. Verfahren nach Anspruch 1,
   bei dem die Referenzelektrode während des Verfahrens mit Wasserstoff versorgt wird.

3. Verfahren nach einem der Ansprüche 1 bis 2,
   bei dem die Gegenelektrode als Anode und die Arbeitselektrode als Kathode ausgebildet sind.

## Claims

1. Method for determining the overvoltage of a working electrode in a fuel cell, in which a fuel cell is used for the measurement,

   - which comprises an electrolyte membrane, in which a continuous working electrode is arranged on one side and a counter electrode as well as a reference electrode on the other side,
   - which has a counter elecrode with at least one side edge,
   - in which the electrolyte membrane surface next to the counter electrode has an electrode-free area,
   - and in which the reference electrode is arranged on the electrolyte membrane surface in the area of the electrode-free area and
   - in which the potential of the reference electrode compared with the earthed counter electrode is measured,

in which for determining the overvoltage a solid oxide fuel cell with an electrolyte membrane with a layer thickness $l_m$ of 1 $\mu$m to 10 $\mu$m or a polymer electrolyte fuel cell with an electrolyte membrane with a layer thickness $l_m$ of 10 $\mu$m to 50 $\mu$m or a direct methanol fuel cell with an electrolyte membrane with a layer thickness $l_m$ of 50 $\mu$m to 100 $\mu$m is used,

the reference electrode is arranged at a distance of between $3 \cdot l_*$ and $10 \cdot l_*$ to the edge of the counter electrode, in which I. Is given by

$$l_* = \sqrt{\frac{\sigma_m b_w l_m}{2 j_w^\infty}}$$

with

$\sigma_m$ = ionic conductivity of the electrolyte membrane ($\Omega^{-1}$ cm$^{-1}$),
$b_w$ = table increase of the half cell for the electrochemical reaction of the working electrode (V),
$l_m$ = membrane layer thickness (cm) and
= exchange current density of the catalyst of the working electrode per unit of electrode surface in (A cm$^{-2}$).

2. Method according to claim 1,
   in which the reference electrode is supplied with hydrogen during the process.

3. Method according to one of claims 1 to 2,
   in which the counter electrode is made as an anode and the working electrode as a cathode.

## Revendications

1. Procédé de détermination de la surtension d'une électrode de travail d'une pile à combustible, dans lequel on utilise, pour la mesure, une pile à combustible,

   - qui comprend une membrane formant électrolyte sur l'une des faces de laquelle est disposée une électrode de travail continue et sur l'autre face de laquelle sont disposées une contre-électrode, ainsi qu'une électrode de référence,
   - qui a une contre-électrode ayant au moins un bord latéral,
   - dans laquelle la surface de la membrane formant électrolyte a, au voisinage de la contre-électrode, une partie sans électrode,
   - et dans laquelle l'électrode de référence est disposée sur la surface de la membrane formant électrolyte dans la région de la partie sans électrode et
   - dans lequel on mesure le potentiel de l'électrode de référence par rapport à la contre-électrode mise à la terre, dans lequel

   pour déterminer la surtension, on utilise une pile à combustible à oxyde solide, ayant une membrane formant électrolyte d'une épaisseur $l_m$ de couche de 1 $\mu$m à 10 $\mu$m ou une pile à combustible à électrolyte polymère, ayant une membrane formant électrolyte d'une épaisseur $l_m$ de couche de 10 $\mu$m à 50 $\mu$m ou une pile à combustible au méthanol direct, ayant une membrane formant électrolyte d'une épaisseur $l_m$ de couche de 50 $\mu$m 100 $\mu$m, l'électrode de référence est disposée à une distance comprise entre $3 \cdot l_*$ et $10 \cdot l_*$ du bord de la contre-électrode, 1* étant donné par

$$l_* = \sqrt{\frac{\sigma_m b_w l_m}{2 j_w^\infty}}$$

avec

$\sigma_m$ = conductivité ionique de la membrane formant électrolyte ($\Omega^{-1}$ cm$^{-1}$),
$b_w$ = pas de Tafel de la demi-cellule pour la réaction électrochimique de l'électrode (V) de travail,

$I_m$ = épaisseur de couche de la membrane (cm) et

$$j_w^\infty =$$ = Densité de courant d'échange du catalyseur de l'électrode de travail par unité de surface de l'électrode en (A cm$^{-2}$).

2. Procédé suivant la revendication 1,
dans lequel on alimente l'électrode de référence en hydrogène pendant le procédé.

3. Procédé suivant l'une des revendications 1 à 2,
dans lequel la contre-électrode est constituée en anode et l'électrode de travail en cathode.

**Figur 1 (aus dem Stand der Technik)**

**Figur 2 (aus dem Stand der Technik)**

**Figur 3**

**Figur 4**

Figur 5

Figur 6

**Figur 7a**

**Figur 7b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H07282832 A

**In der Beschreibung aufgeführte Nicht-Patentliteratur**

- **J. H. OHS ; U. SAUTER ; S. MAASS ; D. STOLTEN.** *J. Electrochem. Soc.,* 2012, vol. 159 (7), FI81-F186
- **B. ADLER et al.** *J. Electrochem. Soc.,* 2002, vol. 149, E166-E172
- **J. H. OHS ; U. SAUTER ; S. MAAS ; D. STOLTEN.** *J. Electrochem. Soc.,* 2012, vol. 159, FI81